Europäisches Patentamt

(19) European Patent Office

Office européen des brevets

(11) Numéro de publication : **0 316 698 B1**

(12) **FASCICULE DE BREVET EUROPEEN**

(45) Date de publication du fascicule du brevet :
25.09.91 Bulletin 91/39

(51) Int. Cl.⁵ : **G01N 1/10, G01N 11/10**

(21) Numéro de dépôt : 88118497.2

(22) Date de dépôt : 07.11.88

(54) **Dispositif pour délivrer une dose prédéterminée d'un liquide.**

(30) Priorité : 13.11.87 FR 8715688

(43) Date de publication de la demande :
24.05.89 Bulletin 89/21

(45) Mention de la délivrance du brevet :
25.09.91 Bulletin 91/39

(84) Etats contractants désignés :
AT BE CH DE ES FR GB GR IT LI LU NL SE

(56) Documents cités :
FR-A- 1 457 933
US-A- 3 077 780
US-A- 3 252 331

(73) Titulaire : Guigan, Jean
9, rue Jean Mermoz
F-75008 Paris (FR)

(72) Inventeur : Guigan, Jean
9, rue Jean Mermoz
F-75008 Paris (FR)

(74) Mandataire : Weinmiller, Jürgen et al
Lennéstrasse 9 Postfach 24
W-8133 Feldafing (DE)

**Description**

La présente invention concerne un dispositif pour délivrer une dose prédéterminée de liquide.

On sait que, pour effectuer une analyse de laboratoire, il est souvent nécessaire de disposer dans un récipient une dose prédéterminée d'une substance liquide, telle que du sérum ou un réactif. Pour cela on utilise couramment une pipette graduée à l'aide de laquelle on prélève par aspiration une certaine quantité de liquide ; puis on laisse couler par gravité la quantité de liquide prédéterminée.

Lorsque la dose à délivrer est très faible, cette méthode présente l'inconvénient d'être imprécise. Dans US-A-3077780 et FR-A-1457933, la dose à délivrer de l'ordre de 10 à 25 microlitres, est prélevée par immersion d'une tête de pipette dans le liquide.

La présente invention a pour but de mettre en oeuvre un dispositif permettant de délivrer des doses beaucoup plus faibles, de l'ordre de 5 microlitres à 10 microlitres, à un pour cent près, afin d'économiser les quantités de sérum et de réactifs nécessaires aux analyses.

La présente invention a pour objet un dispositif pour délivrer une dose prédéterminée d'un liquide comprenant :

— une pipette constituée d'une tige au bout de laquelle est fixée un élément sensiblement sphérique caractérisé en ce que ledit élément sensiblement sphérique est formé d'une demi-sphère creuse fermée par une cloison diamétrale et définissant ainsi un volume calibré correspondant à ladite dose prédéterminée, ladite demi-sphère étant complétée par une portion de calotte sphérique largement ouverte vers l'extérieur, formant une chambre d'entrée pour le liquide et présentant en outre une ouverture périphérique vers l'extérieur et une ouverture dans ladite cloison la mettant en communication avec ledit volume calibré, ces deux ouvertures étant éloignées du centre de ladite demi-sphère,

— des moyens mécaniques pour maintenir l'extrémité libre de ladite tige de manière que la pipette se trouve soit dans une première position de remplissage-calibrage, soit dans une seconde position de vidage, ces deux positions correspondant à deux positions inclinées de ladite cloison diamétrale symétriques par rapport à un plan vertical,

— des moyens mécaniques pour entraîner à grande vitesse ladite pipette en rotation autour d'un axe vertical, qu'elle soit dans ladite première ou ladite seconde position, la demi-sphère étant plus éloignée de l'axe de rotation que ladite chambre d'entrée dans ladite première position, et inversement pour ladite seconde position.

Selon un mode de réalisation, lesdits moyens mécaniques pour maintenir l'extrémité libre de la pipette sont formés d'un support à partie supérieure plane sur laquelle viennent prendre appui alternativement deux tiges dont l'une au moins est commandable et qui permettent le basculement dudit support autour d'un axe horizontal.

La vitesse de rotation autour dudit axe vertical est telle que l'on obtienne des forces centrifuges suffisantes pour un liquide de viscosité donnée.

Ledit élément sensiblement sphérique est réalisé en métal ou en matière plastique.

Ledit volume correspondant à ladite dose prédéterminée est de l'ordre de 5 microlitres à 10 microlitres.

D'autres caractéristiques et avantages de la présente invention apparaitront au cours de la description suivante d'un mode de réalisation donné à titre illustratif mais nullement limitatif. Dans le dessin annexé :

— la figure 1 est une vue en perspective de l'extrémité de la pipette selon l'invention,

— la figure 2 est une vue en coupe transversale passant par le centre de la sphère de la pipette et perpendiculaire à l'axe xx' de la figure 1,

— la figure 3 est une vue schématique en élévation semi-coupée de l'ensemble formé par la pipette et son montage,

— les figures 4A et 4B montrent schématiquement la phase de remplissage de la pipette,

— les figures 5A et 5B montrent schématiquement la phase de calibrage de la pipette,

— les figures 6A et 6B montrent schématiquement la phase de vidage de la pipette.

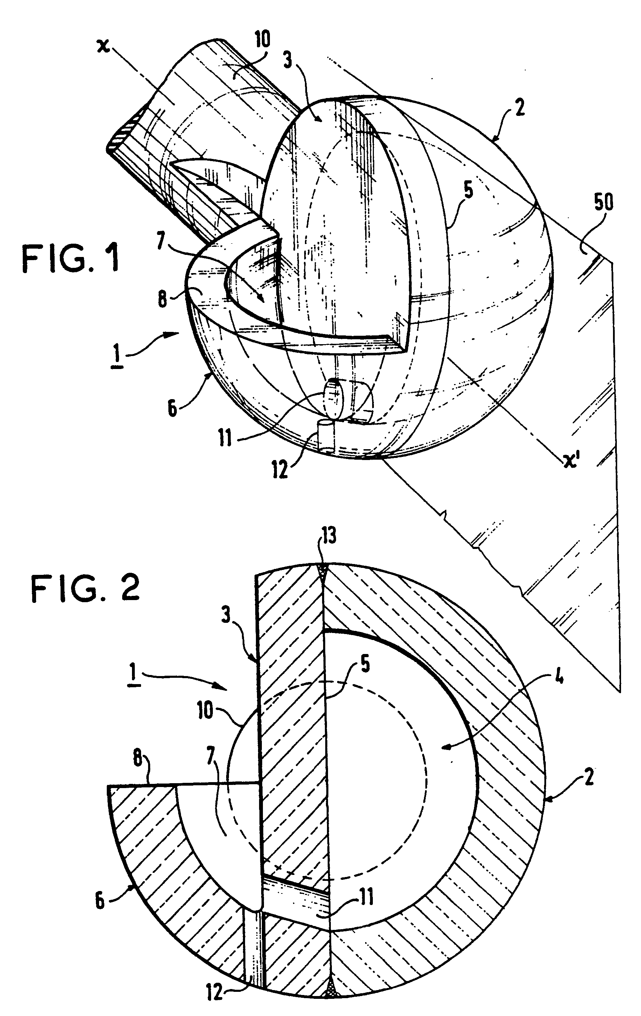

On voit dans les figures 1 et 2 l'extrémité de la pipette 1 selon l'invention. Elle présente globalement la forme d'une sphère dont un quart environ aurait été enlevé. Plus précisément elle comprend une demi-sphère creuse 2 fermée par une cloison diamétrale 3 définissant ainsi un volume intérieur 4 calibré. La face intérieure 5 de la cloison 3 est située dans un plan diamétral de la demi-sphère 2, mais si l'on souhaite réaliser un volume intérieur plus grand ou plus petit que le volume 4, cette face peut être légèrement décalée par rapport à ce plan diamétral. Une portion de calotte sphérique creuse 6 définit une chambre de recueil 7 pour le liquide à calibrer ; elle est adjacente à la cloison 3, largement ouverte sur l'extérieur au niveau de sa face 8, et présente deux petites ouvertures. Une première ouverture 11 est visible dans le plan de la figure 2, qui est un plan de symétrie diamétral pour l'extrémité de la pipette 1, orthogonal à l'axe xx' de la figure 1 ; cette première ouverture est située de préférence le plus loin possible du centre de la sphère, et met en communication le volume 4 et la chambre de recueil 7. Une seconde ouverture 12, visible également dans le plan de la figure 2 et éloignée de l'axe de la sphère, met en communication la chambre de recueil 7 avec l'extérieur.

La pipette selon l'invention comporte en outre une tige 10 centrée sur l'axe xx' et fixée, comme indiqué sur la figure, partiellement sur la face extérieure de la demi-sphère 2 et partiellement sur la face extérieure de la portion de calotte sphérique 6.

A titre d'exemple, cette pipette peut être réalisée en métal usiné, tel que l'acier inoxydable, ou en matière plastique moulée.

Lorsque la pipette est réalisée en métal, son extrémité peut être obtenue à partir de deux pièces, la demi-sphère creuse 2 d'une part et la cloison 3 avec la portion de calotte sphérique 6 d'autre part, ces deux pièces pouvant être solidarisées dans la zone référencée 13 par soudure au laser, ou tout autre procédé équivalent.

Les dimensions sont par exemple :

Rayon de la sphère (2, 6) : 1,683 mm
Epaisseur des parois de la sphère (2, 6) et de la cloison diamétrale 3 : 1,7 mm
Diamètre de la première ouverture 11 : 0,4 mm
Diamètre de la seconde ouverture 12 : 0,2 mm.

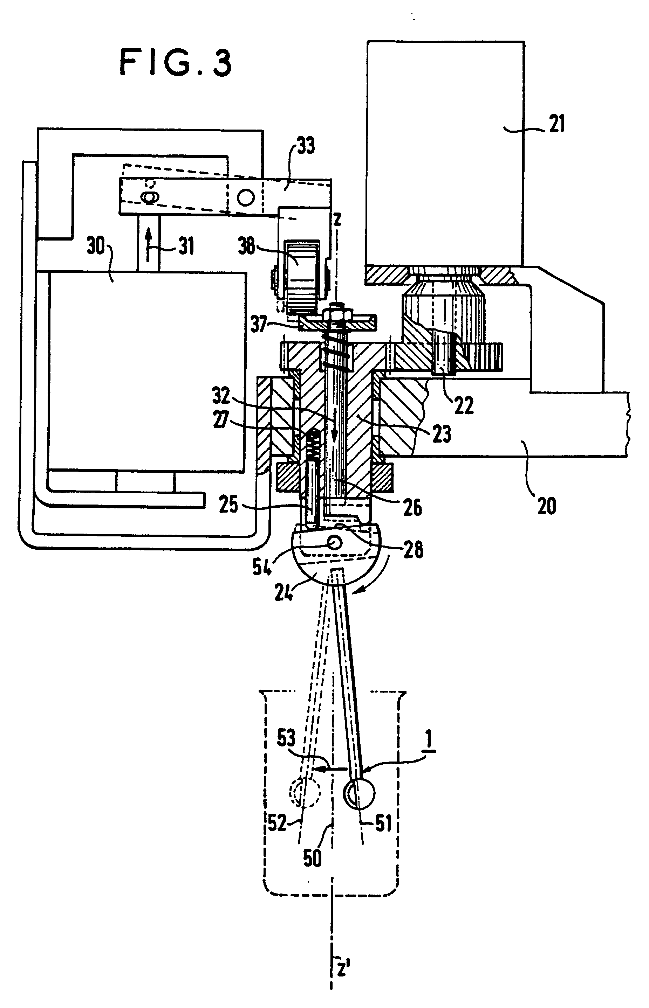

Pour pouvoir définir aisément la position de la pipette de la figure 1 par rapport à son support, on la repère à l'aide du plan 50 passant par sa face 5 et l'axe x'x. Si l'axe x'x est vertical, on retrouve la trace de ce plan 50 dans la figure 3 car il est orthogonal au plan de la figure 3.

La pipette 1 est susceptible de prendre deux positions symétriques par rapport au plan 50. Une première position 51, ou position de remplissage-calibrage, et une deuxième position 52, ou position de vidage. Ces deux positions sont obtenues par rotation autour d'un axe 54 situé dans le plan 50, suivant la flèche 53, rotation obtenue par l'intermédiaire de moyens que l'on va voir plus en détail ci-dessous.

Le dispositif mécanique associé à la pipette et qui est illustré schématiquement dans la figure 3 comprend un bâti fixe 20 sur lequel est fixé un moteur 21 d'axe 22, destiné à entraîner en rotation autour d'un axe vertical zz' correspondant à la trace du plan 50 dans la figure 3, un bloc 23. A la partie inférieure de ce bloc est fixé le support 24 de la pipette 1 présentant une face supérieure plane 28 en contact avec deux tiges d'appui 25 et 26. La tige 25 logée dans le bloc 23 est en appui permanent sur la face 28 grâce à un ressort 27. Il maintient la pipette 1 dans la position 51 illustrée en traits pleins.

La tige 26 peut prendre une autre position verticale grâce à une commande d'un électro-aimant 30 dans le sens de la flèche 31, qui l'entraîne dans le sens de la flèche 32 par l'intermédiaire d'un bras 33, elle fait alors basculer le support 24 autour de l'axe 54 et la pipette 1 se trouve dans la position 52 représentée en traits pointillés.

L'ensemble du bloc 23 avec ses tiges 25 et 26 tourne autour de l'axe zz'. Le contact entre la tige 26 et le bras 33 est maintenu grâce à la coopération d'une couronne 37 avec un rouleau 38.

A titre d'exemple, la vitesse de rotation autour de l'axe zz' est de 7000 tours/minute ; l'angle entre le plan 50 et les plans 51 et 52 est de l'ordre de 3 degrés.

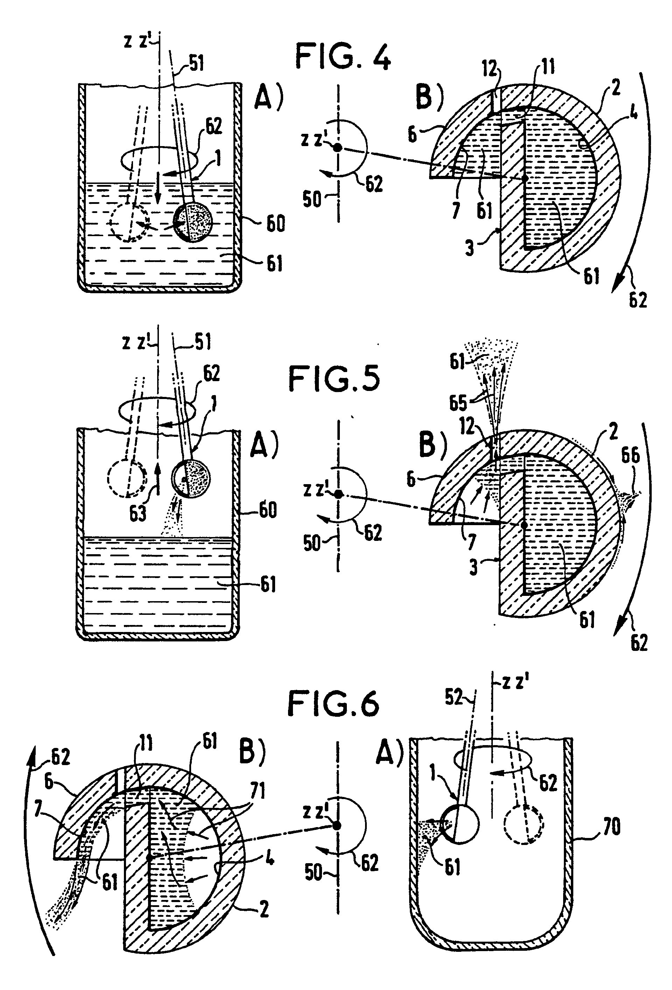

Le dispositif selon l'invention fonctionne de la façon suivante : Dans la figure 4A-4B on a représenté schématiquement en 4A un récipient 60 contenant un liquide 61 où est plongée l'extrémité de la pipette 1 dans la position 51 de la figure 3. Elle est entraînée en rotation autour de l'axe zz' dans le sens des aiguilles d'une montre schématisé par la flèche 62. Grâce à la force centrifuge très importante agissant sur le liquide 61, ce dernier s'introduit dans la chambre 7 et remplit le volume intérieur 4 en passant par l'ouverture 11 (voir figure 4B). On constate que la présence de la chambre 7 permet de canaliser le liquide 61 vers cette ouverture, tout en évitant les turbulences devant elle, et crée une surpression facilitant l'introduction du liquide dans le volume 4. Il faut remarquer qu'aucun orifice supplémentaire n'est nécessaire pour l'évacuation de l'air.

Dans la phase illustrée dans les figures 5A et 5B, on sort la pipette 1 du liquide 61 (flèche 63) tout en continuant à la faire tourner dans le sens 62 autour de l'axe zz'. Il en résulte un vidage par l'orifice 12 du liquide 61 contenu dans la chambre 7 (flèche 65) et d'une évacuation des gouttelettes minuscules 66 qui auraient pu se trouver sur la surface extérieure de la pipette 1. La pipette isole ainsi un volume 4 calibré de liquide 61 ; c'est la phase de calibrage.

Dans les figures 6A et 6B, la pipette est disposée au-dessus d'un récipient 70 destiné à recevoir le liquide 61. Elle se trouve alors dans la seconde position référencée 52 dans la figure 3 et est à nouveau soumise à une rotation à grande vitesse autour de l'axe zz' dans le même sens 62 que pour l'opération antérieure. Il en résulte un vidage du volume 4 (flèches 71) par l'ouverture 11 et la chambre 7.

A titre d'exemple la vitesse de rotation autour de l'axe zz' est de 7000 tours/minute. Bien entendu cette vitesse doit être adaptée à la viscosité du liquide considéré.

Les moyens décrits permettant de faire basculer la pipette entre deux positions 51 et 52 peuvent bien entendu être remplacés par des moyens équivalents.

**Revendications**

1. Dispositif pour délivrer une dose prédéterminée d'un liquide, comprenant :
   — une pipette (1) constituée d'une tige (10) au bout de laquelle est fixée un élément sensiblement sphérique caractérisé en ce que ledit élément sensiblement sphérique est formé d'une demi-sphère creuse (2) fermée par une cloison diamétrale (3) et définissant ainsi un volume (4) calibré correspondant à ladite dose prédéterminée, ladite demi-sphère (2) étant complétée par une portion de calotte sphérique (6) largement ouverte vers l'extérieur formant une chambre d'entrée (7) pour le liquide et présentant en outre une ouverture périphérique (12) vers l'extérieur et une ouverture (11) dans ladite cloison (3) la mettant en communication avec ledit volume (4) calibré, ces deux ouvertures (11, 12) étant éloignées du centre de ladite demi-sphère (2),

— des moyens mécaniques (21, 27, 30, 33) pour maintenir l'extrémité libre de ladite tige (10) de manière que la pipette (1) se trouve soit dans une première position (51) de remplissage-calibrage, soit dans une seconde position (52) de vidage, ces deux positions (51, 52) correspondant à deux positions inclinées de ladite cloison diamétrale (3) symétriques par rapport à un plan vertical (50),

— des moyens mécaniques pour entraîner à grande vitesse ladite pipette (1) en rotation autour d'un axe vertical (z, z'), qu'elle soit dans ladite première (51) ou ladite seconde position (52), la demi-sphère (2) étant plus éloignée de l'axe de rotation (z, z') que ladite chambre d'entrée (7) dans ladite première position (51), et inversement pour ladite seconde position (52).

2. Dispositif selon la revendication 1, caractérisé par le fait que lesdits moyens mécaniques pour maintenir l'extrémité libre de la pipette (1) sont formés d'un support (24) à partie supérieure plane (28) sur laquelle viennent prendre appui alternativement deux tiges (25, 26) dont l'une au moins (26) est commandable et qui permettent le basculement dudit support (24) autour d'un axe horizontal.

3. Dispositif selon l'une des revendications 1 et 2, caractérisé par le fait que la vitesse de rotation autour dudit axe vertical (z, z') est telle que l'on obtienne des forces centrifuges suffisantes pour un liquide de viscosité donnée.

4. Dispositif selon l'une des revendications précédentes, caractérisé par le fait que ledit élément sensiblement sphérique est réalisé en métal ou en matière plastique.

5. Dispositif selon l'une des revendications précédentes, caractérisé par le fait que ledit volume correspondant à ladite dose prédéterminée est de l'ordre de 5 microlitres à 10 microlitres.

**Patentansprüche**

1. Vorrichtung zur Abgabe einer vorbestimmten Dosis an Flüssigkeit, mit

— einer aus einem Stiel (10) bestehende Pipette (1), an deren Ende ein im wesentlichen kugelförmiges Element angeordnet ist, dadurch gekennzeichnet, daß das im wesentlichen kugelförmige Element aus einer hohlen Halbkugel (2) besteht, die durch eine diametrale Zwischenwand (3) verschlossen ist und so ein geeichtes Volumen (4) definiert, das der vorbestimmten Dosis entspricht, wobei die Halbkugel (2) durch einen Kugelkalottenabschnitt (6) vervollständigt ist, der nach außen hin weit geöffnet ist und eine Eintrittskammer (7) für die Flüssigkeit bildet und der weiter eine nach außen führend periphere Öffnung (12) und eine Öffnung (11) in der Zwischenwand (3) aufweist, die die Kammer mit dem geeichten Volumen (4) in Verbindung bringt, wobei die beiden Öffnungen (11, 12) entfernt vom Mittelpunkt der Halbkugel angebracht sind,

— mechanischen Mitteln (21, 27, 30, 33) zur Halterung des freien Endes des Stiels (10) in der Weise, daß sich die Pipette (1) entweder in einer ersten Stellung, der Füll-Dosierstellung (51) oder in einer zweiten Stellung, der Entleerungsstellung (52) befindet, wobei die beiden Stellungen (51, 52) zwei geneigten Stellungen der diametralen Zwischenwand (3) entsprechen, welche symmetrisch zu einer senkrechten Ebene (50) liegen,

— und mechanischen Mitteln, mit dem Zweck, die Pipette (1) in eine hohe Drehgeschwindigkeit um eine senkrechte Achse (Z, Z') zu versetzen, unabhängig davon, ob sich die Pipette in der ersten (51) oder in der zweiten Stellung (52) befindet, wobei in der ersten Stellung (51) die Halbkugel (2) weiter von der Rotationsachse (z, z') entfernt ist als die Eintrittskammer (7), während es im Fall der zweiten Stellung (52) umgekehrt ist.

2. Vorrichtung nach Anspruch 1, dadurch gekennzeichnet, daß die mechanischen Mittel zur Halterung des freien Endes der Pipette (1) aus einem Tragekörper (24) mit einer ebenen Oberfläche (28) bestehen, auf der sich abwechselnd zwei Stifte (25, 26) abstützen, von denen mindestens einer (26) steuerbar ist, und die beide die Kippbewegung des Tragekörpers (24) um eine waagrechte Achse ermöglichen.

3. Vorrichtung nach Anspruch 1 oder 2, dadurch gekennzeichnet, daß die Drehgeschwindigkeit um die senkrechte Achse (z, z') so bemessen ist, daß bei einer Flüssigkeit bestimmter Viskosität ausreichend grobe Zentrifugalkräfte erzielt werden.

4. Vorrichtung nach einem der vorhergehenden Ansprüche, dadurch gekennzeichnet, daß das im wesentlichen kugelförmige Element aus Metall oder Kunststoff besteht.

5. Vorrichtung nach einem der vorhergehenden Ansprüche, dadurch gekennzeichnet, daß das der vorbestimmten Dosis entsprechende Volumen zwischen etwa 5 und 1 Mikrolitern liegt.

## Claims

1. A device for dispensing a predetermined dose of a liquid, comprising :

— a pipette constituted by a shaft (10) having a substantially spherical element fixed at one end thereof, characterized in that said substantially spherical element is constituted by a hollow hemisphere (2) closed by a diametrical partition (3), thereby defining a calibrated volume (4) corresponding to said predetermined dose, said hemisphere (2) being completed by a spherical cap portion (6) which widely opens out towards the outside, forming a liquid inlet chamber (7) and including a peripheral opening (12) leading to the outside and an opening (11) through said partition (3), adapted to put it into communication with said calibrated volume (4), said two openings (11, 12) being at a distance from the center of said hemisphere (2),

— mechanical means (21, 27, 30, 33) for holding the free end of said shaft (10) in such a manner that the pipette (1) is either in a first position (51) for filling and calibration, or else in a second position (52) for emptying, said two positions (51, 52) corresponding to two inclined positions of said diametrical partition (3) relative to a vertical plane (50), and

— means for rotating said pipette (1) at high speed about a vertical axis ($zz'$) both in said first (51) and second position (52), with the hemisphere (2) being further away from the axis of rotation ($zz'$) than said inlet chamber (7) in said first position (51), and inversely in said second position (52).

2. A device according to claim 1, characterized in that said mechanical means for holding the free end of the pipette (1) are constituted by a support (24) having a plane top portion (28) against which one or other of two rods (25, 26) come into abutment, with at least one of the rods (26) being controllable in position, thereby enabling said support (24) to be tilted about a horizontal axis.

3. A device according to claim 1 or 2, characterized in that the speed of rotation about said vertical axis ($zz'$) is such as to obtain a centrifugal force which is sufficient for a liquid of given viscosity.

4. A device according to any preceding claim, characterized in that said substantially spherical element is made of metal or of plastic material.

5. A device according to any preceding claim, characterized in that said volume corresponding to said predetermined quantity is about 5 microliters to about 10 microliters.

x

10

3

2

5

50

FIG. 1

7

8

1

6

11

12

x'

13

FIG. 2

3

1

10

5

4

8

7

2

6

11

12

# FIG.3

# FIG. 4

A)

B)

# FIG.5

A)

B)

# FIG.6

B)

A)